# EUROPÄISCHE PATENTSCHRIFT

(11) **EP 3 724 972 B1**
(45) Veröffentlichungstag und Bekanntmachung des Hinweises auf die Patenterteilung: **05.01.2022**
(21) Anmeldenummer: 18811227.0
(22) Anmeldetag: 27.11.2018
(51) Int. Cl.: H02K 11/25

(54) **FEDERKLEMME ZUM AUFSTECKEN AUF EINEN ELEKTRISCHEN LEITER EINER ELEKTRISCHEN MASCHINE**
SPRING CLAMP FOR FITTING ONTO AN ELECTRICAL CONDUCTOR OF AN ELECTRIC MACHINE
SERRE-JOINT À RESSORT DESTINÉ À ÊTRE FIXÉ À UN CONDUCTEUR ÉLECTRIQUE D'UNE MACHINE ÉLECTRIQUE

(30) Priorität: 13.12.2017 DE 102017222543
(43) Veröffentlichungstag der Anmeldung: 21.10.2020
(73) Patentinhaber: Vitesco Technologies GmbH, 93055 Regensburg (DE)
(72) Erfinder: BHAT, Uday, 81737 München (DE); ELTNER, Frank, 81737 München (DE); DMITRASINOVIC, Zoran, 81737 München (DE); BEER, Anton, 81737 München (DE); KOHLSTRUNK, Johannes, 81737 München (DE)
(86) Internationale Anmeldenummer: PCT/EP2018/082735
(87) Internationale Veröffentlichungsnummer: WO 2019/115224

(56) Entgegenhaltungen:
- EP-A2- 0 727 864
- WO-A2-2005/034152
- DE-A1- 3 817 080

## Beschreibung

Die Erfindung betrifft eine Federklemme zum Aufstecken auf einen elektrischen Leiter einer elektrischen Maschine, wobei die Federklemme eine Sensorhalterung zur Aufnahme eines Temperatursensors und einen Federarm aufweist, wobei der Temperatursensor über den Federarm in der Sensorhalterung fixierbar ist, und die Sensorhalterung an den elektrischen Leiter anpressbar ist. Zudem betrifft die Erfindung die Verwendung der erfindungsgemäßen Federklemme zur Anordnung auf einen elektrischen Leiter einer elektrischen Maschine. Des Weiteren betrifft die Erfindung eine elektrische Maschine mit einem Stator, wobei der Stator wenigstens einen elektrischen Leiter aufweist und auf den elektrischen Leiter die erfindungsgemäße Federklemme angeordnet ist.

Elektrische Maschinen, insbesondere Startergeneratoren, mit einem Stator, wobei der Stator wenigstens einen elektrischen Leiter aufweist, sind allgemein bekannt. Weiterhin ist bekannt, dass im Betrieb der elektrischen Maschine Temperaturen von bis zu 180° C entstehen können. Für einen sicheren Betrieb der elektrischen Maschine ist es daher unabdinglich, die genaue Temperatur innerhalb der elektrischen Maschine zu erfassen. Bekannt ist weiter, dass auf dem Neutralleiter sehr hohe Temperaturen gemessen werden. Die Temperaturen innerhalb der elektrischen Maschine werden daher in der Regel auf dem Neutralleiter erfasst.

Die WO 2005 034 152 A2 beschreibt ein Verfahren zum Verbinden einer abnehmbaren Wicklung an einen ortsfesten Wicklungssteckverbinder, wobei der Wicklungssteckverbinder eine Federklemme beziehungsweise einen Clip gemäß dem Oberbegriff des Patentanspruchs 1 zeigt.

Aus der DE 38 17 080 A1 ist eine Temperaturüberwachungseinrichtung für Spaltmotoren bekannt.

Die EP 0 727 864 A2 offenbart eine Verschaltungsanordnung für einen Elektromotor.

Es besteht ein regelmäßiges Bedürfnis, die Anordnung des Temperatursensors auf einen elektrischen Leiter der elektrischen Maschine zu optimieren, um die Temperaturen innerhalb der elektrischen Maschine während des Betriebs verlässlich zu erfassen.

Es ist die Aufgabe der Erfindung eine Federklemme zur Anordnung auf einen elektrischen Leiter einer elektrischen Maschine bereitzustellen, mittels derer ein Temperatursensor in einfacher Weise lagesicher an den elektrischen Leiter befestigbar ist.

Die Aufgabe wird gelöst durch den Gegenstand der unabhängigen Patentansprüche. Vorteilhafte Ausgestaltungen der Erfindung sind in den abhängigen Ansprüchen, der Beschreibung und den Zeichnungen angegeben, wobei jedes Merkmal sowohl einzeln als auch in Kombination ein Aspekt der Erfindung darstellen kann.

Erfindungsgemäß ist eine Federklemme zum Aufstecken auf einen elektrischen Leiter einer elektrischen Maschine vorgesehen, aufweisend einen ersten Federschenkel und einen an den ersten Federschenkel angrenzenden zweiten Federschenkel, wobei der erste Federschenkel und der zweite Federschenkel derart zueinander angeordnet und/oder ausgebildet sind, dass zwischen einem freien ersten Endabschnitt des ersten Federschenkels und einem freien zweiten Endabschnitt des zweiten Federschenkels eine Aufnahmeöffnung zur Aufnahme eines elektrischen Leiters ausgebildet ist, und dieser zwischen dem ersten Endabschnitt und dem zweiten Endabschnitt verklemmbar ist, der zweite Federschenkel eine Sensorhalterung und einen Federarm mit einer Anpresslasche aufweist, und über den Federarm eine Federkraft ausübbar ist, so dass ein in der Sensorhalterung angeordneter und/oder anordbarer Sensor über die Anpresslasche in der Sensorhalterung fixierbar ist, und die Sensorhalterung an den elektrischen Leiter anpressbar ist.

Mit anderen Worten ist es ein Aspekt der vorliegenden Erfindung eine Federklemme bereitzustellen, die einen ersten Federschenkel und einen an den ersten Federschenkel angrenzenden zweiten Federschenkel aufweist. Somit wird eine Federklemme mit einem ersten und einem zweiten Federschenkel angegeben. Der erste Federschenkel und der zweite Federschenkel sind dabei derart zueinander angeordnet, dass zwischen einem freien ersten Endabschnitt des ersten Federschenkels und einem freien zweiten Endabschnitt des zweiten Federschenkels eine Aufnahmeöffnung ausgebildet ist. Ein Leiterende eines elektrischen Leiters, der für gewöhnlich ein Neutralleiter ist, kann durch die Aufnahmeöffnung geführt werden, wobei der elektrische Leiter zwischen dem jeweiligen ersten Endabschnitt und dem zweiten Endabschnitt verklemmt wird. Auf diese Weise ist die Federklemme lagesicher und/oder selbstnachstellend auf den elektrischen Leiter anordbar. Der zweite Federschenkel weist eine Sensorhalterung und einen Federarm mit einer Anpresslasche auf. Die Sensorhalterung ist vorzugsweise dazu eingerichtet und ausgebildet einen Sensor, insbesondere einen Temperatursensor, aufzunehmen. Über den Federarm ist eine Federkraft ausübbar, so dass der in der Sensorhalterung angeordnete Sensor über die Anpresslasche in der Sensorhalterung lagesicher fixierbar ist. Die Sensorhalterung wiederum ist an den elektrischen Leiter anpressbar. Hierzu kann die Sensorhalterung federnd ausgebildet sein, wobei es ebenso denkbar ist, dass über die Federkraft des Federarms der Sensor an die Sensorhalterung gepresst wird und zudem die Sensorhalterung an den elektrischen Leiter anpressbar ist. Somit wird eine Federklemme bereitgestellt, die in einfacher Weise auf den elektrischen Leiter aufsteckbar und mit diesem selbstnachstellend verklemmbar ist. Des Weiteren ist ein Temperatursensor über den Federarm selbstnachstellend in der Sensorhalterung lagesicher positionierbar und an den elektrischen Leiter anpressbar, so dass der Temperatursensor lagesicher mit dem elektrischen Leiter verbindbar und/oder an diesen anlegbar ist.

Es ist dabei nicht zwingend erforderlich, dass der Temperatursensor direkt oder zumindest abschnittsweise direkt mit dem elektrischen Leiter verbindbar und/oder anlegbar ist. Dies bedeutet, dass zwischen dem Temperatursensor und dem elektrischen Leiter zumindest abschnittsweise die Sensorhalterung ausgebildet sein kann.

Unter dem Begriff "selbstnachstellend" ist zu verstehen, dass die Klemmkraft der Federklemme und/oder die Federkraft des Federarms derart ausgebildet ist, dass vorzugsweise eine temperaturschwankungsbedingte Querschnittsänderung des in die Federklemme eingeführten elektrischen Leiters über die Klemmkraft der Federklemme kompensiert wird und eine sicher Positionierung der Federklemme auf dem elektrischen Leiter gewährleistet werden kann bzw. eine Kompensation der Federkraft des Federarms erfolgt, so dass der Sensor in der Sensorhalterung lagesicher fixierbar ist und sicher an den elektrischen Leiter angepresst werden kann.

Eine bevorzugte Weiterbildung der Erfindung liegt darin, dass die Sensorhalterung zwischen dem zweiten Endabschnitt des zweiten Federschenkels und dem Übergangsbereich zwischen dem ersten Federschenkel und dem zweiten Federschenkel angeordnet und/oder ausgebildet ist. Demnach ist die Sensorhalterung unmittelbar in dem zweiten Federschenkel ausgebildet.

In einer vorteilhaften Weiterbildung ist vorgesehen, dass die Sensorhalterung U-förmig ausgebildet ist, wobei die aufrechten Arme der U-förmigen Sensorhalterung den zweiten Endabschnitt des zweiten Federschenkels abgewandt sind. Mit anderen Worten bedeutet dies, dass die aufrechten Arme der U-förmigen Sensorhalterung sich in Richtung der Einsteckrichtung des elektrischen Leiters in die Aufnahmeöffnung der Federklemme erstrecken. Vorzugsweise ist der Temperatursensor zumindest abschnittsweise auf den aufrechten Armen der U-förmigen Sensorhalterung anordbar.

In diesem Zusammenhang liegt eine bevorzugte Weiterbildung der Erfindung darin, dass die Endbereiche der aufrechten Arme der U-förmigen Sensorhalterung aufgekantet und/oder abgekantet sind. Unter dem Begriff "Aufkanten" und/oder "Abkanten" ist ein Umbiegen der Endbereiche der aufrechten Arme zu verstehen. Die Endbereiche werden dabei vorzugsweise in einer Richtung senkrecht zur Einsteckrichtung des elektrischen Leiters in die Federklemme abgebogen. Die aufgebogenen Endbereiche stellen somit einen Anschlag für den Temperatursensor dar, so dass dieser zumindest in einer Richtung einen Anschlag aufweist.

Eine vorteilhafte Weiterbildung der Erfindung liegt darin, dass der Federarm im Übergangsbereich zwischen dem ersten Federschenkel und dem zweiten Federschenkel angebunden und/oder ausgebildet ist. Dies bedeutet, dass der Federarm mit einem zur Federlasche beabstandeten Federarmende an diesen Übergangsbereich befestigt ist.

Grundsätzlich kann die Federkraft des Federarms derart ausgerichtet sein, so dass der in der Sensorhalterung anordbare Temperatursensor lagesicher in der Sensorhalterung fixierbar ist. Eine bevorzugte Weiterbildung der Erfindung liegt darin, dass die Federkraft des Federarms in einer Richtung senkrecht zur Einsteckrichtung des elektrischen Leiters durch die Aufnahmeöffnung wirkt. Die U-förmige Sensorhalterung ist zumindest abschnittsweise parallel zur Einsteckrichtung des elektrischen Leiters durch die Aufnahmeöffnung ausgerichtet. Dies bedeutet, dass über den Federarm ein in der Sensorhalterung angeordneter Temperatursensor an die Sensorhalterung gepresst wird und die Sensorhalterung auf den elektrischen Leiter angelegt wird. Auf diese Weise kann über den Federarm eine selbstnachstellende Fixierung des Temperatursensors auf den elektrischen Leiter bereitgestellt werden.

In einer vorteilhaften Weiterbildung der Erfindung ist vorgesehen, dass der zweite Endabschnitt des zweiten Federschenkels über zwei zueinander beabstandet angeordnete Längsstreben an den ersten Federschenkel angebunden ist. Folglich weist der zweite Federschenkel die beiden Längsstreben auf, wobei ein erstes Längsstrebenende im Übergangsbereich zwischen dem zweiten Federschenkel und dem ersten Federschenkel an den ersten Federschenkel angebunden ist, und ein zweites Längsstrebenende mit dem zweiten Endabschnitt verbunden ist. Die Längsstreben sind derart gebogen, dass diese federnd ausgebildet sind. Auf diese Weise kann eine Klemmwirkung der freien Endabschnitte zueinander bewirkt werden, so dass der elektrische Leiter zwischen dem ersten Endabschnitt und dem zweiten Endabschnitt verklemmbar ist.

In diesem Zusammenhang sieht eine bevorzugte Weiterbildung der Erfindung vor, dass der Federarm und/oder die Sensorhalterung zwischen den zwei Längsstreben ausgebildet ist.

Eine vorteilhafte Weiterbildung der Erfindung sieht vor, dass die Federklemme einstückig ausgebildet ist. Auf diese Weise kann eine sehr robuste Federklemme hergestellt werden, die zudem preiswert herstellbar ist.

Grundsätzlich ist es denkbar, dass eine derartige Federklemme aus einem Kunststoff oder aus einem metallischen Werkstoff hergestellt sein kann. Hierbei kann vorgesehen sein, dass die Federklemme mittels eines additiven Herstellungsverfahrens hergestellt wird. Eine Federklemme aus einem Kunststoff kann bevorzugt im Spritzgießverfahren hergestellt sein. Eine besonders bevorzugte Weiterbildung der Erfindung liegt darin, dass die Federklemme als Stanzbiegeteil ausgebildet ist. Auf diese Weise kann die Federklemme besonders preiswert und in großen Stückzahlen in einfacher Weise hergestellt werden. Sofern die Federklemme als Stanzbiegeteil ausgebildet ist, ist diese besonders bevorzugt aus einem metallischen Werkstoff ausgebildet und/oder weist einen metallischen Werkstoff auf.

Ein metallischer Werkstoff hat den Vorteil, dass dieser die Temperatur sehr gut leiten kann, so dass für eine verlässliche Temperaturerfassung des in die Federklemme eingeführten elektrischen Leiters nicht zwangsläufig erforderlich ist, dass der Temperatursensor unmittelbar an den elektrischen Leiter angrenzt. Demnach kann auch die Sensorhalterung zwischen dem Temperatursensor und dem elektrischen Leiter ausgebildet sein.

Die Erfindung betrifft zudem die Verwendung der erfindungsgemäßen Federklemme auf einem elektrischen Leiter einer elektrischen Maschine, wobei die Federklemme über die Aufnahmeöffnung auf ein Leiterende des elektrischen Leiters aufsteckbar und mit diesem verklemmbar ist, so dass das Leiterende zwischen dem ersten Federschenkel und dem zweiten Federschenkel zumindest abschnittsweise angeordnet ist, in der Sensorhalterung ein Temperatursensor anordbar ist, und die Sensorhalterung an den elektrischen Leiter anpressbar ist.

Mit anderen Worten ist es ein Aspekt der Verwendung der erfindungsgemäßen Federklemme, dass die Federklemme auf ein Leiterende des elektrischen Leiters aufsteckbar ist, wobei das Leiterende durch die Aufnahmeöffnung der Federklemme geführt wird und das Leiterende zwischen dem ersten Endabschnitt und dem zweiten Endabschnitt verklemmt wird bzw. verklemmbar ist. In der Sensorhalterung des zweiten Federschenkels ist ein Temperatursensor anordbar, um die Temperatur des elektrischen Leiters bzw. des Leiterendes zu erfassen. Der Temperatursensor ist über den Federarm an die Sensorhalterung anpressbar. Die Sensorhalterung wiederum ist an den elektrischen Leiter anpressbar, so dass der Temperatursensor die Temperatur des elektrischen Leiters erfassen kann. Dadurch, dass die Federklemme auf das Leiterende aufgeklemmt bzw. mit dem Leiterende verklemmt ist, kann eine selbstnachstellende Fixierung der Federklemme auf dem Leiterende bereitgestellt werden. Über den Federarm wird der Temperatursensor an das Leiterende gepresst, so dass auch der Temperatursensor selbstnachstellend mit dem Leiterende in Kontakt steht, wodurch dieser lagesicher mit dem Leiterende derart verbunden werden kann, dass die Temperatur von dem Leiterende erfassbar ist.

Abschließend betrifft die Erfindung eine elektrische Maschine mit einem Stator, wobei der Stator wenigstens einen elektrischen Leiter aufweist, auf einem Leiterende des elektrischen Leiters die erfindungsgemäße Federklemme aufgesteckt und mit dem Leiterende verklemmt ist, ein Temperatursensor in der Sensorhalterung angeordnet und über den Federarm in der Sensorhalterung fixiert ist, und die Sensorhalterung an den elektrischen Leiter angepresst ist.

Unter einer elektrischen Maschine ist vorzugsweise ein Startergenerator zu verstehen, insbesondere ein 48 Volt Riemenstartergenerator.

Weitere Merkmale und Vorteile der Erfindung ergeben sich aus den Unteransprüchen sowie den nachfolgenden Ausführungsbeispielen. Die Ausführungsbeispiele sind nicht einschränkend, sondern vielmehr als beispielhaft zu verstehen. Sie sollen dem Fachmann in die Lage versetzen, die Erfindung auszuführen. Der Anmelder behält sich vor, einzelne oder mehrere der in den Ausführungsbeispielen offenbarten Merkmale zum Gegenstand von Patentansprüchen zu machen oder solche Merkmale in bestehende Patentansprüche aufzunehmen. Die Ausführungsbeispiele werden anhand von Figuren näher erläutert.

In diesen zeigen:
- Fig. 1: eine dreidimensionale Ansicht der Federklemme,
- Fig. 2: eine dreidimensionale Ansicht der Federklemme, wobei die Federklemme auf einen elektrischen Leiter aufgesteckt ist und in einer Sensorhalterung der Federklemme ein Temperatursensor angeordnet ist.

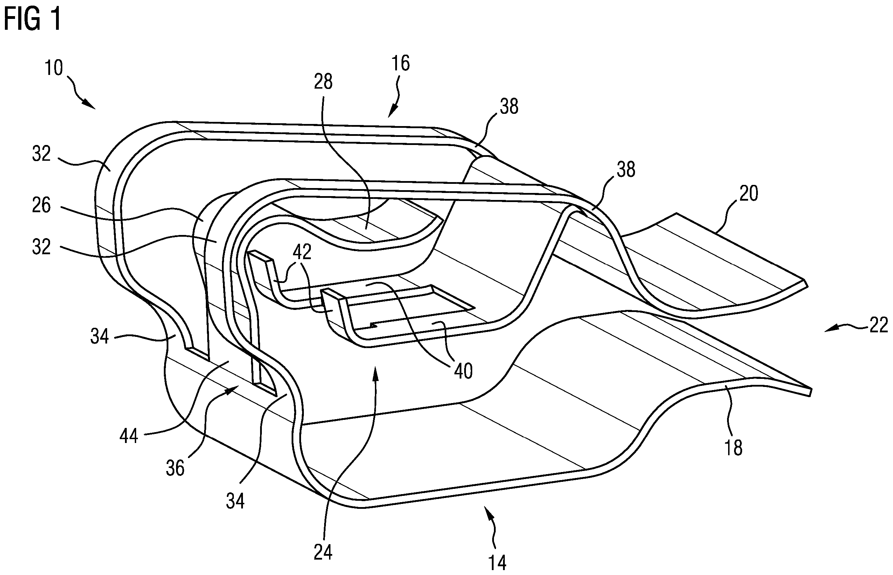

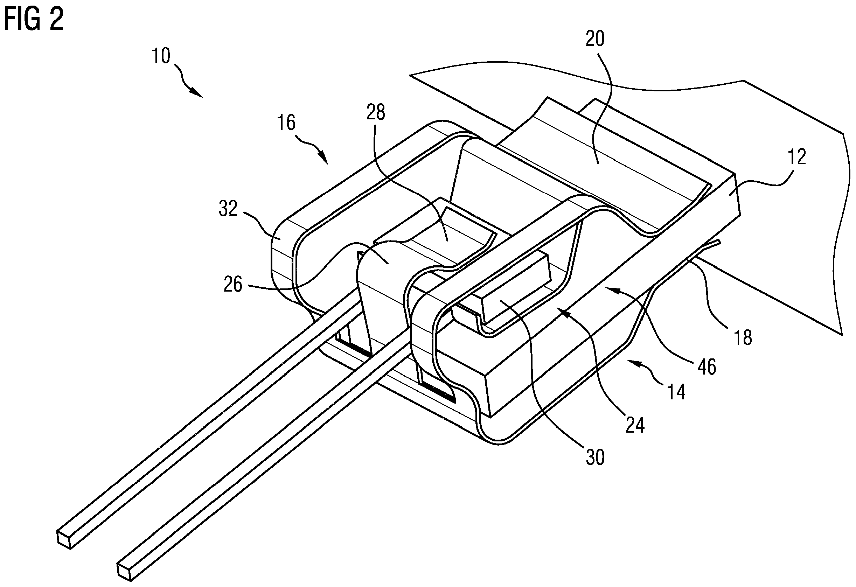

In Figur 1 ist eine Federklemme 10 zum Aufstecken auf einen elektrischen Leiter 12 einer elektrischen Maschine gezeigt. Die Federklemme 10 weist einen ersten Federschenkel 14 und einen an den ersten Federschenkel 14 angrenzenden zweiten Federschenkel 16 auf. Der erste Federschenkel 14 und der zweite Federschenkel 16 grenzen somit aneinander. Der erste Federschenkel 14 und der zweite Federschenkel 16 sind dabei derart zueinander angeordnet und ausgebildet, dass zwischen einem freien ersten Endabschnitt 18 des ersten Federschenkels 14 und einem freien zweiten Endabschnitt 20 des zweiten Federschenkels 16 eine Aufnahmeöffnung 22 zur Aufnahme des elektrischen Leiters 12 ausgebildet ist. Der elektrische Leiter 12 (Fig. 2) ist dabei zwischen dem ersten Endabschnitt 18 und dem zweiten Endabschnitt 20 verklemmbar, so dass die Federklemme lagesicher und selbstnachstellend auf dem Leiterende 46 des elektrischen Leiters 12 befestigt bzw. fixiert ist.

Der zweite Federschenkel 16 umfasst eine Sensorhalterung 24 und einen Federarm 26 mit einer Anpresslasche 28, wobei über den Federarm 26 eine Federkraft ausübbar ist, so dass ein in der Sensorhalterung 24 angeordneter Sensor 30, insbesondere ein Temperatursensor, über die Anpresslasche 28 in der Sensorhalterung 24 fixierbar ist. Die Sensorhalterung 24 ist an den elektrischen Leiter 12 anpressbar, so dass die Sensorhalterung 24 an den elektrischen Leiter 12 zumindest abschnittsweise anliegt. Auf diese Weise kann ein Kontakt des Temperatursensors 30 mit dem elektrischen Leiter 12 hergestellt werden, um die Temperatur des elektrischen Leiters 12 zu erfassen. Bedingt dadurch, dass der Temperatursensor 30 über den Federarm 26 in der Sensorhalterung 24 selbstnachstellend fixiert ist, und die Sensorhalterung 24 an den elektrischen Leiter 12 angepresst wird, kann eine selbstnachstellende Befestigung des Temperatursensors 30 auf den elektrischen Leiter 12 über die Federklemme 10 bereitgestellt werden.

Der zweite Endabschnitt 20 des zweiten Federschenkels 16 ist über zwei zueinander beabstandet angeordnete Längsstreben 32 an den ersten Federschenkel 14 angebunden. Dies bedeutet, dass ein erstes Längsstrebenende 34 im Übergangsbereich 36 zwischen dem ersten Federschenkel 14 und dem zweiten Federschenkel 16 an den ersten Federschenkel 14 angebunden ist. Ein zweites Längsstrebenende 38 ist mit dem zweiten Endabschnitt 20 verbunden. Über die Längsstreben 32 ist der zweite Federschenkel 16 federnd ausgebildet, so dass der durch die Aufnahmeöffnung 22 einsteckbare bzw. einführbare elektrische Leiter 12 zwischen dem ersten Endabschnitt 18 und dem zweiten Endabschnitt 20 verklemmbar ist.

Die Sensorhalterung 24 ist zwischen dem zweiten Endabschnitt 20 und dem Übergangsbereich 36 angeordnet. Die Sensorhalterung 24 weist eine U-förmige Ausgestaltung auf, wobei die aufrechten Arme 40 der U-förmigen ausgebildeten Sensorhalterung 24 dem zweiten Endabschnitt 20 des zweiten Federschenkels 16 abgewandt sind. Mit anderen Worten bedeutet dies, dass sich die aufrechten Arme 40 der U-förmigen Sensorhalterung 24 in Längsrichtung des elektrischen Leiters 12 erstrecken. Die aufrechten Arme 40 erstrecken sich dabei zumindest abschnittsweise parallel zur Längsrichtung des elektrischen Leiters 12 bzw. parallel zur Einsteckrichtung des elektrischen Leiters 12 durch die Aufnahmeöffnung 22. Über die aufrechten Arme 40 kann somit zumindest abschnittsweise ein Kontakt zum elektrischen Leiter 12 hergestellt werden. Die aufrechten Arme 40 dienen zudem sowohl als Auflage und/oder Aufnahme des Temperatursensors 30.

Die Endbereiche 42 der aufrechten Arme 40 der U-förmigen Sensorhalterung 24 sind aufgekantet bzw. abgekantet. Dies bedeutet, dass die Endbereiche 42 umgebogen sind. Die Endbereiche 42 sind in einer Richtung im Wesentlichen senkrecht zur Einsteckrichtung des elektrischen Leiters 12 in die Federklemme 10 umgebogen. Auf diese Weise können die Endbereiche 42 den in der Sensorhalterung 24 angeordneten Temperatursensor 30 zumindest einer Richtung lagesicher positionieren.

Der Federarm 26 ist im Übergangsbereich 36 zwischen dem ersten Federschenkel 14 und dem zweiten Federschenkel 16 angebunden. Dies bedeutet, dass der Federarm 26 mit einem Federarmende 44 im Übergangsbereich 36 an den ersten Federschenkel 14 angebunden ist. Die Federkraft des Federarms 26 wirkt in einer Richtung senkrecht zur Einsteckrichtung des elektrischen Leiters 12 durch die Aufnahmeöffnung 22. Dies bedeutet zugleich, dass die Federkraft des Federarms 26 in einer Richtung senkrecht zur Längsrichtung des elektrischen Leiters 12 wirkt. Der Federarm 26 und die Sensorhalterung 24 sind zwischen den zwei Längsstreben 32 ausgebildet.

In dem vorliegenden Ausführungsbeispiel ist die Federklemme 10 einstückig ausgebildet und zudem als Stanzbiegeteil, wobei die Federklemme 10 zudem einen metallischen Werkstoff aufweist. Auf diese Weise ist die Federklemme 10 in einer hohen Stückzahl besonders preiswert herstellbar.

In Figur 2 ist die aus Figur 1 bekannte Federklemme 10 gezeigt, wobei die Federklemme 10 auf den elektrischen Leiter 12 aufgesteckt ist. Dabei greift ein Leiterende 46 durch die Aufnahmeöffnung 22 ein, so dass das Leiterende 46 zwischen dem ersten Federschenkel 14 und dem zweiten Federschenkel 16 angeordnet ist. In der Sensorhalterung 24 ist der Temperatursensor 30 angeordnet, der über den Federarm 26 in der Sensorhalterung 24 lagesicher fixiert ist. Die Sensorhalterung 24 ist an den elektrischen Leiter 12 bzw. an das Leiterende 46 des elektrischen Leiters 12 angepresst. Die Federkraft des Federarms 26 wirkt dabei in einer Richtung senkrecht zur Längsrichtung des elektrischen Leiters 12 bzw. in einer Richtung senkrecht zur Einsteckrichtung des elektrischen Leiters 12 in die Federklemme 10. Auf diese Weise wird eine besonders preiswert herstellbare Federklemme 10 bereitgestellt, die in einfacher Weise auf den elektrischen Leiter 12 aufsteckbar ist, und den Temperatursensor 30 in einfacher Weise mit dem elektrischen Leiter 12 verbinden kann, so dass eine verlässliche Temperaturerfassung des elektrischen Leiters 12 ermöglicht werden kann.

## Patentansprüche

1. Federklemme (10) zum Aufstecken auf einen elektrischen Leiter (12) einer elektrischen Maschine, aufweisend
einen ersten Federschenkel (14) und einen an den ersten Federschenkel (14) angrenzenden zweiten Federschenkel (16), wobei der erste Federschenkel (14) und der zweite Federschenkel (16) derart zueinander angeordnet und/oder ausgebildet sind, dass zwischen einem freien ersten Endabschnitt (18) des ersten Federschenkels (14) und einem freien zweiten Endabschnitt (20) des zweiten Federschenkels (16) eine Aufnahmeöffnung (22) zur Aufnahme des elektrischen Leiters (12) ausgebildet ist, und dieser zwischen dem ersten Endabschnitt (18) und dem zweiten Endabschnitt (20) verklemmbar ist, **dadurch gekennzeichnet, dass**
der zweite Federschenkel (16) eine Sensorhalterung (24) und einen Federarm (26) mit einer Anpresslasche (28) aufweist, und über den Federarm (26) eine Federkraft ausübbar ist, so dass ein in der Sensorhalterung (24) angeordneter und/oder anordbarer Sensor (30) über die Anpresslasche (28) in der Sensorhalterung (24) fixierbar ist, und die Sensorhalterung (24) an den elektrischen Leiter (12) anpressbar ist.

2. Federklemme nach Anspruch 1, **dadurch gekennzeichnet, dass** die Sensorhalterung (24) zwischen dem zweiten Endabschnitt (20) des zweiten Federschenkels (16) und dem Übergangsbereich (36) zwischen dem ersten Federschenkel (14) und dem zweiten Federschenkel (16) angeordnet und/oder ausgebildet ist.

3. Federklemme nach Anspruch 1 oder 2, **dadurch gekennzeichnet, dass** die Sensorhalterung (24) U-förmig ausgebildet ist, wobei die aufrechten Arme (40) der U-förmigen Sensorhalterung (24) dem zweiten Endabschnitt (20) des zweiten Federschenkels (16) abgewandt sind.

4. Federklemme nach Anspruch 3, **dadurch gekennzeichnet, dass** die Endbereiche (42) der aufrechten Arme (40) der U-förmigen Sensorhalterung (24) aufgekantet und/oder abgekantet sind.

5. Federklemme nach einem der vorhergehenden Ansprüche, **dadurch gekennzeichnet, dass** der Federarm (26) im Übergangsbereich (36) zwischen dem ersten Federschenkel (14) und dem zweiten Federschenkel (16) angebunden ist.

6. Federklemme nach einem der vorhergehenden Ansprüche, **dadurch gekennzeichnet, dass** die Federkraft des Federarms (26) in einer Richtung senkrecht zur Einsteckrichtung des elektrischen Leiters (12) durch die Aufnahmeöffnung (22) wirkt.

7. Federklemme nach einem der vorherigen Ansprüche, **dadurch gekennzeichnet, dass** der zweite Endabschnitt (20) des zweiten Federschenkels (16) über zwei zueinander beabstandet angeordnete Längsstreben (32) an den ersten Federschenkel (14) angebunden ist.

8. Federklemme nach Anspruch 7, **dadurch gekennzeichnet, dass** der Federarm (26) und/oder die Sensorhalterung (24) zwischen den zwei Längsstreben (32) ausgebildet ist.

9. Federklemme nach einem der vorherigen Ansprüche, **dadurch gekennzeichnet, dass** die Federklemme (10) einstückig ausgebildet ist.

10. Federklemme nach einem der vorherigen Ansprüche, **dadurch gekennzeichnet, dass** die Federklemme (10) als Stanzbiegeteil ausgebildet ist.

11. Verwendung einer Federklemme (10) nach einem der vorherigen Ansprüche zur Anordnung auf einem elektrisch Leiter (12) einer elektrischen Maschine, wobei
die Federklemme (10) über die Aufnahmeöffnung (22) auf ein Leiterende (46) des elektrischen Leiters (12) aufsteckbar undmit diesem verklemmbar ist, so dass das Leiterende (46) zwischen dem ersten Federschenkel (14) und dem zweiten Federschenkel (16) zumindest abschnittsweise angeordnet ist, und
in der Sensorhalterung (24) ein Temperatursensor (30) anordbar ist, und
die Sensorhalterung (24) an den elektrischen Leiter (12) anpressbar ist.

12. Elektrische Maschine mit einem Stator, wobei
der Stator wenigstens einen elektrischen Leiter (12) aufweist,
auf einem Leiterende des elektrischen Leiters (12) eine Federklemme (10) nach einem der Ansprüche 1 bis 10 aufgesteckt und mit dem Leiterende (46) verklemmt ist,
ein Temperatursensor (30) in der Sensorhalterung (24) angeordnet und über den Federarm (26) in der Sensorhalterung (24) fixiert ist, und
die Sensorhalterung (24) an den elektrischen Leiter (12) angepresst ist.

## Claims

1. Spring clamp (10) for plugging onto an electrical conductor (12) of an electric machine, having
a first spring leg (14) and a second spring leg (16) adjoining the first spring leg (14), wherein the first spring leg (14) and the second spring leg (16) are arranged and/or formed with respect to one another in such a way that a receiving opening (22) for receiving the electrical conductor (12) is formed between a free first end portion (18) of the first spring leg (14) and a free second end portion (20) of the second spring leg (16), and said conductor can be clamped between the first end portion (18) and the second end portion (20), **characterized in that**
the second spring leg (16) has a sensor holder (24) and a spring arm (26) with a press-on tab (28), and a spring force can be exerted by way of the spring arm (26) such that a sensor (30) which is and/or can be arranged in the sensor holder (24) can be fixed in the sensor holder (24) by way of the press-on tab (28), and the sensor holder (24) can be pressed onto the electrical conductor (12).

2. Spring clamp according to Claim 1, **characterized in that** the sensor holder (24) is arranged and/or formed between the second end portion (20) of the second spring leg (16) and the transition region (36) between the first spring leg (14) and the second spring leg (16).

3. Spring clamp according to Claim 1 or 2, **characterized in that** the sensor holder (24) is U-shaped in form, wherein the upright arms (40) of the U-shaped sensor holder (24) face away from the second end portion (20) of the second spring leg (16).

4. Spring clamp according to Claim 3, **characterized in that** the end regions (42) of the upright arms (40) of the U-shaped sensor holder (24) are upturned and/or folded.

5. Spring clamp according to one of the preceding claims, **characterized in that** the spring arm (26) is attached in the transition region (36) between the first spring leg (14) and the second spring leg (16).

6. Spring clamp according to one of the preceding claims, **characterized in that** the spring force of the spring arm (26) acts in a direction perpendicular to the plug-in direction of the electrical conductor (12) through the receiving opening (22).

7. Spring clamp according to one of the preceding claims, **characterized in that** the second end portion (20) of the second spring leg (16) is attached to the first spring leg (14) by way of two longitudinal struts (32) arranged spaced apart from one another.

8. Spring clamp according to Claim 7, **characterized in that** the spring arm (26) and/or the sensor holder (24) are/is formed between the two longitudinal struts (32).

9. Spring clamp according to one of the preceding claims, **characterized in that** the spring clamp (10) is formed in one piece.

10. Spring clamp according to one of the preceding claims, **characterized in that** the spring clamp (10) is formed as a stamped and bent part.

11. Use of a spring clamp (10) according to one of the preceding claims for arranging on an electrical conductor (12) of an electric machine, wherein
the spring clamp (10) can be plugged by way of the receiving opening (22) onto a conductor end (46) of the electrical conductor (12) and can be clamped thereto, with the result that the conductor end (46) is arranged between the first spring leg (14) and the second spring leg (16) at least in certain portions, and
a temperature sensor (30) can be arranged in the sensor holder (24), and
the sensor holder (24) can be pressed onto the electrical conductor (12).

12. Electric machine having a stator, wherein
the stator has at least one electrical conductor (12),
a spring clamp (10) according to one of Claims 1 to 10 is plugged on a conductor end of the electrical conductor (12) and clamped to the conductor end (46),
a temperature sensor (30) is arranged in the sensor holder (24) and fixed in the sensor holder (24) by way of the spring arm (26), and
the sensor holder (24) is pressed onto the electrical conductor (12).

## Revendications

1. Borne à ressorts (10) destinée à être emmanchée sur un conducteur électrique (12) d'une machine électrique, présentant
une première branche de ressort (14) et une deuxième branche de ressort (16) adjacente à la première branche de ressort (14), la première branche de ressort (14) et la deuxième branche de ressort (16) étant disposées l'une par rapport à l'autre et/ou réalisées de telle sorte qu'entre une première partie d'extrémité libre (18) de la première branche de ressort (14) et une deuxième partie d'extrémité libre (20) de la deuxième branche de ressort (16) est réalisée une ouverture de réception (22) pour recevoir le conducteur électrique (12) et celui-ci peut être serré entre la première partie d'extrémité (18) et la deuxième partie d'extrémité (20),
**caractérisée en ce que** la deuxième branche de ressort (16) présente un support de capteur (24) et un bras de ressort (26) doté d'une languette de pression (28), et **en ce qu'**une force de ressort peut être exercée par l'intermédiaire du bras de ressort (26) de sorte qu'un capteur (30) disposé et/ou pouvant être disposé dans le support de capteur (24) peut être fixé dans le support de capteur (24) par l'intermédiaire de la languette de pression (28), et le support de capteur (24) peut être pressé contre le conducteur électrique (12) .

2. Borne à ressorts selon la revendication 1, **caractérisée en ce que** le support de capteur (24) est disposé et/ou réalisé entre la deuxième partie d'extrémité (20) de la deuxième branche de ressort (16) et la zone de transition (36) entre la première branche de ressort (14) et la deuxième branche de ressort (16).

3. Borne à ressorts selon la revendication 1 ou 2, **caractérisée en ce que** le support de capteur (24) est réalisé en forme de U, les bras redressés (40) du support de capteur (24) en forme de U étant détournés de la deuxième partie d'extrémité (20) de la deuxième branche de ressort (16).

4. Borne à ressorts selon la revendication 3, **caractérisée en ce que** les zones d'extrémité (42) des bras redressés (40) du support de capteur (24) en forme de U sont repliées vers le haut et/ou vers le bas.

5. Borne à ressorts selon l'une quelconque des revendications précédentes, **caractérisée en ce que** le bras de ressort (26) est rattaché dans la zone de transition (36) entre la première branche de ressort (14) et la deuxième branche de ressort (16).

6. Borne à ressorts selon l'une quelconque des revendications précédentes, **caractérisée en ce que** la force de ressort du bras de ressort (26) agit dans une direction perpendiculaire à la direction d'enfichage du conducteur électrique (12) à travers l'ouverture de réception (22).

7. Borne à ressorts selon l'une quelconque des revendications précédentes, **caractérisée en ce que** la deuxième partie d'extrémité (20) de la deuxième branche de ressort (16) est rattachée à la première branche de ressort (14) par l'intermédiaire de deux barrettes longitudinales (32) disposées à distance l'une de l'autre.

8. Borne à ressorts selon la revendication 7, **caractérisée en ce que** le bras de ressort (26) et/ou le support de capteur (24) sont réalisés entre les deux barrettes longitudinales (32).

9. Borne à ressorts selon l'une quelconque des revendications précédentes, **caractérisée en ce que** la borne à ressorts (10) est réalisée d'un seul tenant.

10. Borne à ressorts selon l'une quelconque des revendications précédentes, **caractérisée en ce que** la borne à ressorts (10) est réalisée sous forme de pièce découpée pliée.

11. Utilisation d'une borne à ressorts (10) selon l'une quelconque des revendications précédentes destinée à être disposée sur un conducteur électrique (12) d'une machine électrique, dans laquelle
la borne à ressorts (10) peut être emmanchée à travers l'ouverture de réception (22) sur une extrémité de conducteur (46) du conducteur électrique (12) et peut être serrée avec celui-ci de sorte que l'extrémité de conducteur (46) est disposée au moins par endroits entre la première branche de ressort (14) et la deuxième branche de ressort (16), et
un capteur de température (30) peut être disposé dans le support de capteur (24), et
le support de capteur (24) peut être pressé contre le conducteur électrique (12).

12. Machine électrique comprenant un stator, dans laquelle
le stator présente au moins un conducteur électrique (12),
sur une extrémité de conducteur du conducteur électrique (12) une borne à ressorts (10) selon l'une quelconque des revendications 1 à 10 est emmanchée sur et serrée avec l'extrémité de conducteur (46),
un capteur de température (30) est disposé dans le support de capteur (24) et est fixé par l'intermédiaire du bras de ressort (26) dans le support de capteur (24), et
le support de capteur (24) est pressé contre le conducteur électrique (12).
